# EUROPEAN PATENT APPLICATION

(11) **EP 1 061 670 A1**
(43) Date of publication of application: **20.12.2000**
(21) Application number: 99304648.1
(22) Date of filing: 15.06.1999
(51) Int. Cl.: H04B 7/185, H04Q 7/38

(54) **Method of registering a satellite telephony terminal**

(71) Applicant: ICO Services Ltd., London W6 9BN (GB)
(72) Inventor: Mullins, Dennis Roy, London SE11 5UL (GB)
(74) Representative: Musker, David Charles

(57) **Abstract**

A method of registering a satellite telephony user terminal with a system comprising one or more earth stations for communication with said user terminal via one or more satellites; and one or more switch nodes interconnected therewith by a terrestrial network; the method comprising; determining whether data has been received from the terminal, which is indicative of the identity of the user or the user terminal if so, determining therefrom a switch node to be used for communication with that terminal; and allocating that switch node as the node via which calls to and from the user terminal should be directed; if not; determining whether data has been received from the terminal, which is indicative of a switch node to be used for communication with that terminal and not of the identity of the user or the user terminal; and allocating that switch node as the node via which calls to and from the user terminal should be directed; if not; allocating a said switch node on other criteria.

## Description

### FIELD OF THE INVENTION

This invention relates to communications with a mobile user, and particularly (but not exclusively) to such communications in which the link to the mobile user is via a satellite or satellites.

Terrestrial cellular communication systems are well known in the art and a number of standards, such as the GSM standard and the PCN standard exist which define different signalling protocols for them. Details of these standards are given for example in "Mobile Radio Technology" by Gordon White, Butterworth Heinemann, 1994. The GSM and PCN systems are digital communication systems and allow paging and data communications in addition to voice communications.

Mobile satellite communication systems have also been proposed in which radio frequency links are provided by a constellation of satellites. These satellite communication systems provide much greater coverage than terrestrial cellular systems. One example of such a system is the ICO^{TM} system, aspects of which are described in patent publications WO 95/28747, WO 96/03814 and GB 2,295,296A. Other examples include the Iridium™ satellite cellular system, described for example in EP-A-0365885, and the Odyssey™ mobile communication system described for example in EP-A-0510789, EP-A-0575678 and EP-A-0648027.

An alternative proposed satellite cellular system is described in EP 0536921 and EP 0506255.

The earth station in such systems typically combines the functions of a mobile switching centre (MSC) of a terrestrial network, and a satellite earth station, fulfilling some functions of a terrestrial Base Station Controller (BSC). The earth stations are interconnected by a terrestrial network, typically separate of the international PSTN.

It is known (e.g. from EP 0792543) to provide the system with sufficient earth stations that, at least in some areas, one of several could be chosen to communicate with the user terminal. In such a case, it is also known to select one of the earth stations on the basis of the best link quality, taking into account the user terminal position, the satellite positions, movements of the satellites in future, and measured link quality over the satellite links.

However, although this might seem at first sight to give the best selection of an earth station, there are circumstances where this selection process must be supplemented. It may be desired to separate the functions of the switch and the earth station. To ameliorate user terminal location problems, the switch to handle routing to and from the user terminal may be placed at a first node (which may also be an earth station) and the earth station may be placed at a second (which may also be a switch). The two are commonly the same node (at least for much of the time). When the two are separate, they are interconnected by a communications link. Thus, even if the user terminal is reassigned to another earth station (perhaps because of temporary radio fading) several times during a call, the network continues to treat the switch node as the point of contact for the user terminal. In such a system, the switch node may be assigned on the basis of the user position and the earth station on the basis of link quality, measured and/or predicted.

However, we have realised that some types of mobile user may predominantly call one particular number, or a set of numbers on a particular region of the Earth. In this case, the routing can be complex if all calls to or from the user are routed via the nearest node to wherever the user may be on the Earth. Also, some users (for example, governmental users) may prefer or require to connect to a single switch node, perhaps because it is the best point of contact to a private network.

Accordingly, in a satellite communications system of the invention, at least some user terminals are operable to transmit, and the network to action, data from which a switch node to serve that user terminal can be derived. Thus, terminals can select their own switch node. Preferably, the network is also operable, where no such data is transmitted, to allocate a switch node on the basis of criteria unconnected with the identity of the user terminal (such as link quality or position).

Since each mobile terminal in a GSM-type has a unique International Mobile Subscriber Identity which is transmitted on registration with the network, it might be thought that the invention could be implemented simply by providing a look-up table mapping each user terminal IMSI to a switch node. However, this is unsatisfactory because, for security reasons, the majority of registrations with the network do not involve the transmission of the IMSI. Instead, on registration, a Temporary International Mobile Subscriber Identity is allocated, and used in future registrations where possible. For security reasons, the TMSI is uncorrelated with the identity of the user or terminal and hence, it is unsuitable for the purposes of the invention,.

According to a further aspect of the invention, therefore, the data transmitted is indicative of the switch node to be used, rather than the user. Thus, security is maintained.

Particularly preferably, the data comprises an indication of the last switch used by the terminal, together with a flag indicating that that switch is to be used again. Thus, the data can be present in signals both from terminals which require use of a specific switch node and terminals which do not, the latter sending a different flag value to indicate that use of the previous switch node is not mandatory.

Thus, the invention is able to allow certain terminals to select use of a switch node which will give simpler connection, since it is closer to the source or destination of most of their calls. Further, where (as described in our earlier application number EP 0808037) traffic is carried on the terrestrial network in low bit-rate form (i.e. lower than the terrestrial 64Kbit per second network), the traffic can be carried in low bit-rate format close to where it needs to go (in the from-mobile direction; or from its origin in the to-mobile direction) rather than being converted to high bit-rate PSTN format at the earth station node, with consequent saving of bandwidth and capacity.

Other aspects and preferred embodiments of the invention are as described or claimed hereafter, with advantages which will be apparent from the following.

### BRIEF DESCRIPTION OF THE DRAWINGS

Embodiments of the invention will now be described, by way of example only, with reference to the accompanying drawings, in which:
Figure 1 is a block diagram showing schematically the elements of a first communications system embodying the present invention;
Figure 2a is an illustrative is a block diagram showing schematically the elements of mobile terminal equipment suitable for use with the present invention; and
Figure 2b is a corresponding block diagram;
Figure 3 is a block diagram showing schematically the elements of an Earth station node forming part of the embodiment of Figure 1;
Figure 4 illustrates schematically the beams produced by a satellite in the embodiment of Figure 1;
Figure 5 illustrates schematically the disposition of satellites forming part of Figure 1 in orbits around the Earth;
Figure 6 illustrates the data rates carried between components on Earth;
Figure 7 is a flow diagram showing schematically the process performed by the network on initial registration of a terminal;
Figure 8 (comprising Figures 8a and 8b) is a flow diagram showing the process performed in the network to allocate a temporary identification;
Figure 9 (comprising Figures 9a ad 9b) is a flow diagram showing the process performed by the user terminal and the network respectively on a subsequent registration; and
Figure 10 is a flow diagram modifying the process of Figure 7 in a second embodiment of the invention.

### FIRST EMBODIMENT

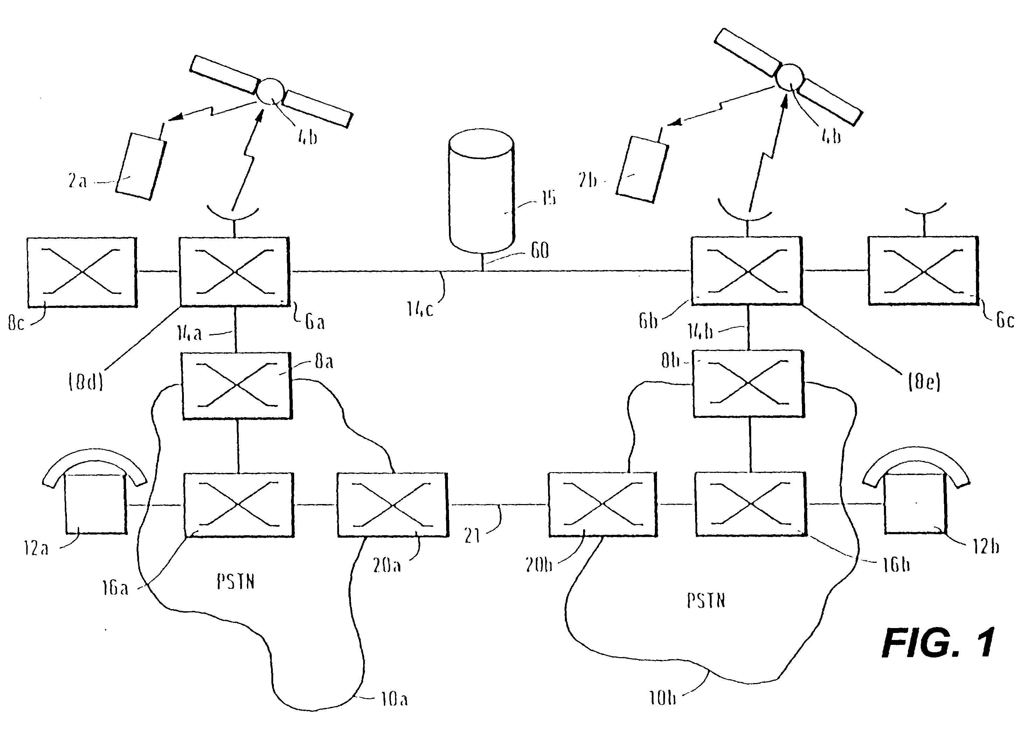

Referring to Figure 1, a satellite communications network according to this embodiment comprises mobile user terminal equipment 2a, 2b (e.g. handsets 2a and 2b); orbiting relay satellites 4a, 4b; satellite Earth station nodes 6a, 6b; satellite system gateway stations 8a, 8b; terrestrial (e.g. public switched) telecommunications networks 10a, 10b; and fixed telecommunications terminal equipment 12a, 12b.

Interconnecting the satellite system gateways 8a, 8b with the Earth station nodes 6a, 6b, and interconnecting the nodes 6a, 6b with each other, is a dedicated ground-based network comprising cables 14a, 14b, 14c. The satellites 4, Earth station nodes 6 and lines 14 make up the infrastructure of the satellite communications network, for communication with the mobile terminals 2, and accessible through the gateway stations 8.

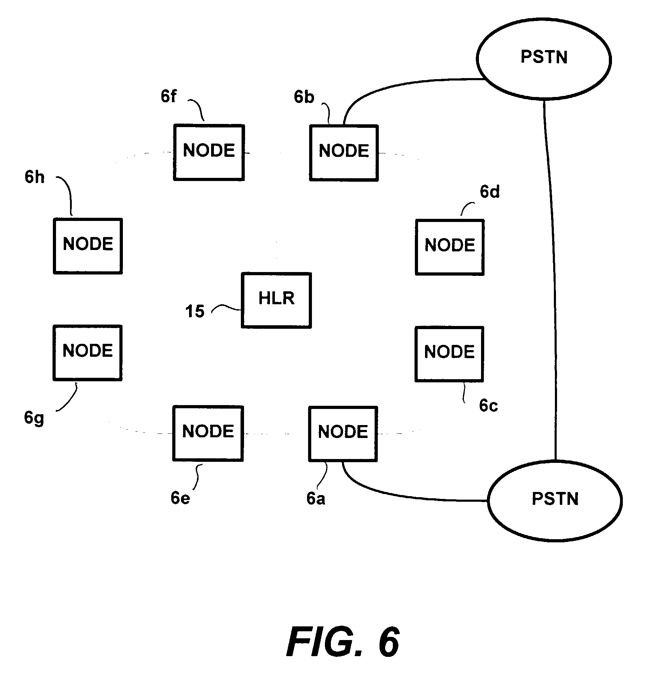

As shown in Figure 6, in this embodiment the speech signal is carried within the ground-based network at a low bit rate (shown in dashed lines), which may be the bit rate used over the radio path (e.g. 4 to 8 Kbits per second) or may have the channel coding eliminated to reduce the rate to that used by the speech coder (e.g. 2 to 4 Kbits per second). On the other hand, the speech signal within and between PSTNs is carried at 64Kbits per second. Thus, speech is carried more efficiently over the ground-based network, as discussed in our earlier application EP 0808037, incorporated herein by reference in its entirety.

A terminal location database station 15 (equivalent to a GSM HLR) is connected, via a signalling link 60 (e.g. within the channels 14 of the dedicated network) to the gateway station and Earth stations 6.

The PSTNs 10a, 10b comprise, typically, local exchanges 16a, 16b to which the fixed terminal equipment 12a, 12b is connected via local loops 18a, 18b; and international switching centres 20a, 20b connectable one to another via transitional links 21 (for example, satellite links or subsea optical fibre cable links). The PSTNs 10a, 10b and fixed terminal equipment 12a, 12b (e.g. telephone instruments) are well known and almost universally available today. The gateway stations are international switching centres of the PSTNs 10.

For voice communications, each mobile terminal apparatus is in communication with a satellite 4 via a full duplex channel (in this embodiment) comprising a downlink channel and an uplink channel, for example (in each case) a TDMA time slot on a particular frequency allocated on initiation of a call, as disclosed in UK patent applications GB 2288913 and GB 2293725. The satellites 4 in this embodiment are non geostationary, and thus, periodically, there is handover from one satellite 4 to another.

### Terminal 2

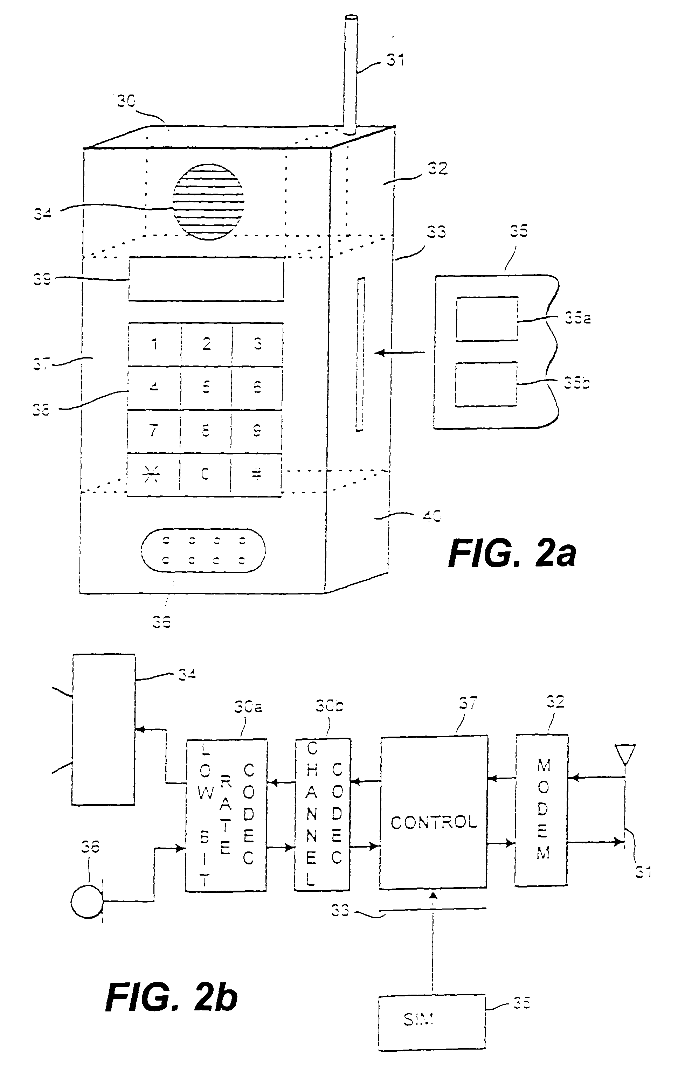

Referring to Figures 2a and 2b, a user terminal equipment 2a of Figure 1 is shown.

The terminals 2a, 2b may be similar to those presently available for use with the GSM system, comprising a digital low rate coder/decoder 30, together with conventional microphone 36, loudspeaker 34, battery 40 and keypad components 38, and a radio frequency (RF) interface 32 and antenna 31 suitable for satellite communications. A display 39 (for example a liquid crystal display) and a 'smart card' reader 33 receiving a smart card (subscriber identity module or SIM) 35 storing user information are also provided.

Specifically, the SIM 35 includes a processor 35a and permanent memory 35b.

Also provided is a terminal control circuit 37 (which may in practice be integrated with the coder 30) consisting of a suitably programmed microprocessor, microcontroller or digital signal processor (DSP) chip.

The control circuit 37 performs various functions including framing speech and data into TDMA time frames for transmission (and likewise demultiplexing received TDMA frames); and performing encryption or enciphering.

The coder/decoder (codec) 30 in this embodiment comprises a low bit rate coder 30a, generating a speech bit stream at around 3.6 kilobits per second, together with a channel coder 30b applying error correcting encoding, to generate an encoded bit stream at a rate of 4.8 kilobits per second.

### Earth Station Node 6

The Earth station nodes 6 are arranged for communication with the satellites.

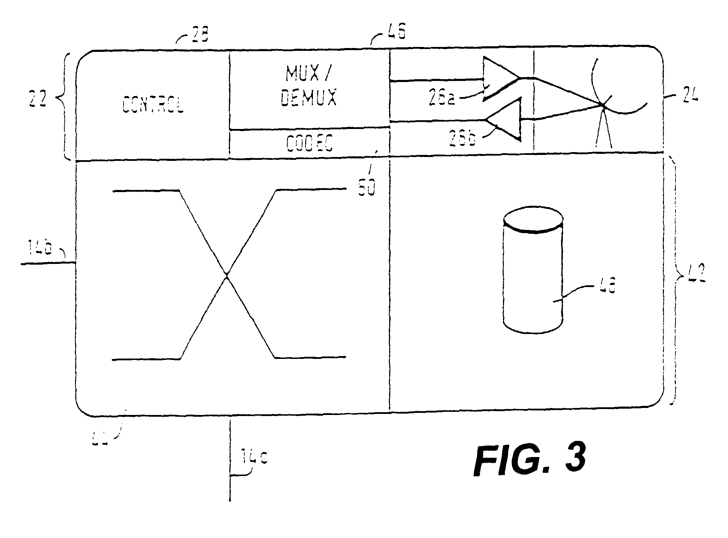

Each Earth station node 6 comprises, as shown in Figure 3, a conventional satellite Earth station 22 (functioning somewhat equivalently to the Base Station of a cellular system) consisting of at least one satellite tracking antenna 24 arranged to track at least one moving satellite 4, RF power amplifiers 26a for supplying a signal to the antenna 24, and 26b for receiving a signal from the antenna 24; and a control unit 28 for storing the satellite ephemera data, controlling the steering of the antenna 24, and effecting any control of the satellite 4 that may be required (by signalling via the antenna 24 to the satellite 4).

The Earth station node 6 further comprises a mobile satellite switching centre 42 comprising a network switch 44 connected to the trunk links 14 forming part of the dedicated network. It may be, for example, a commercially available mobile switch centre (MSC) of the type used in digital mobile cellular radio systems such as GSM systems. A multiplexer 46 is arranged to receive switched calls from the switch 44 and multiplex them into a composite signal for supply to the amplifier 26 via low bit-rate voice codec 50a and channel codec 50b.

The incoming PSTN lines from the PSTN 10 are thus linked to the low bit-rate codec, which performs transcoding between 64Kbit/sec PSTN speech and 4 Kbit/sec low bitrate speech. The dedicated service lines 14 already carry low bitrate speech and so are not routed via the low bitrate coder 40a but pass to channel codec 50b.

Finally, the Earth station node 6 comprises a local store 48 storing details of each mobile terminal equipment 2a within the area served by the satellite 4 with which the node 6 is in communication. The local store 48 acts to fulfil the functions of a visited location register (VLR) of a GSM system, and may be based on commercially available GSM products. Alternatively, satellite control data may be transmitted from a separate control station.

The database station 15 comprises a digital data store which contains, for every subscriber terminal apparatus 2, a record showing the identity (e.g. the International Mobile Subscriber Identity or IMSI); the service provider station 8 with which the apparatus is registered (to enable billing and other data to be collected at a single point) and the currently active Earth station node 6 with which the apparatus 2 is in communication via the satellite 4.

Thus, in this embodiment the database station 15 acts to fulfil the functions of a home location register (HLR) of a GSM system, and may be based on commercially available GSM products.

The mobile satellite switching centre 42 of each node 6 is, in fact, in this embodiment, capable of acting as the switching centre not only for its collocated Earth station 22 but also for the Earth stations 22 of other nodes.

To achieve, this the control unit 28 of each node is arranged where necessary to set up a link over the ground network lines 14, to route predetermined time and frequency channels in the satellite downlink signal (corresponding to particular calls) directly on assigned channels from a first node 6a to the mobile satellite switching centre 42 of another node 6b and to set up associated signalling channels to allow the mobile satellite switching centre 42 of the other node 6b to control the call. Operating in this fashion, therefore, radio resource and link layer functions are performed by the Earth station of one node 6a whereas higher layer functions are performed at the satellite switching centre of another 6b, including call management, switching and so on.

### Satellites 4

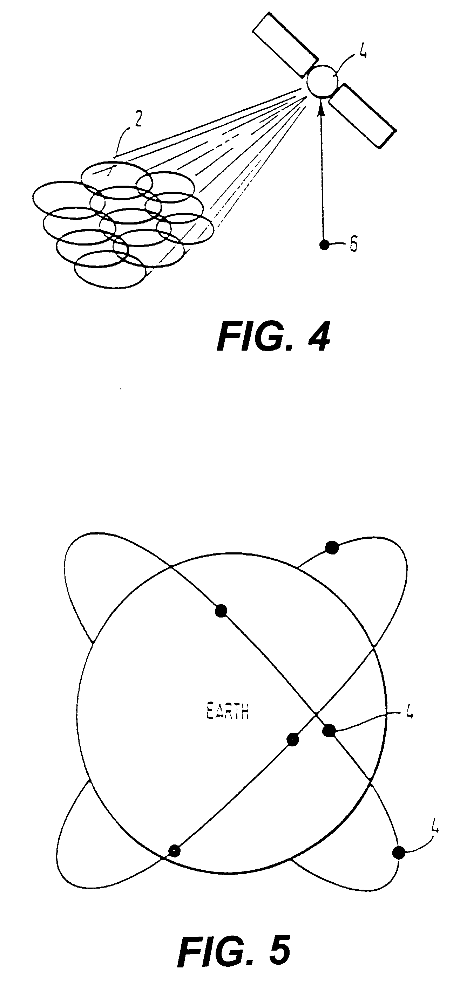

The satellites 4a, 4b comprise generally conventional communications satellites such as the HS601 available from Hughes Aerospace Corp, California, US with a communications payload, which may be as disclosed in GB 2288913. Each satellite 4 is arranged to generate an array (typically hexagonal) of beams covering a footprint beneath the satellite, each beam including a number of different frequency channels and time slots, as described in GB 2293725 and illustrated in Figure 4.

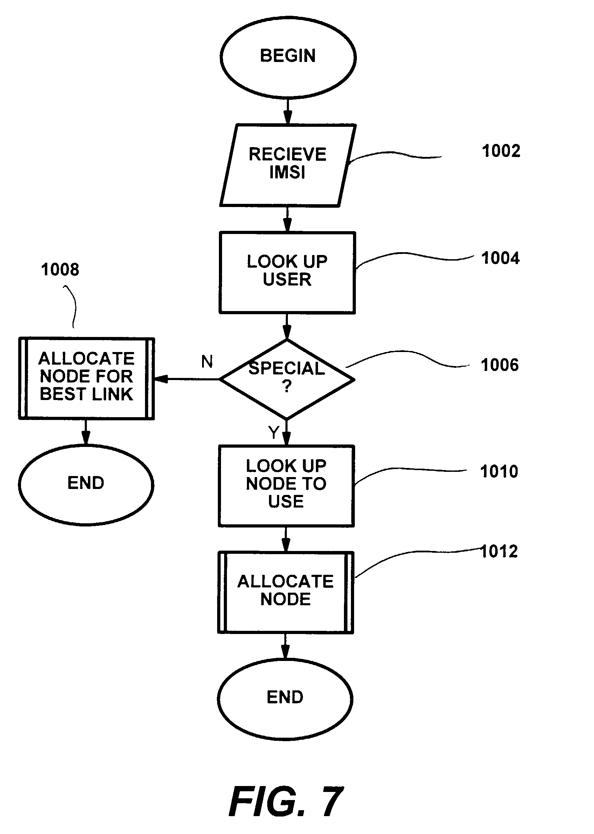

On each beam, the satellite therefore transmits a set of user downlink frequencies as shown in Figure 7. The frequencies are separated by a frequency guard band. The downlink frequencies on adjacent beams are different, so as to permit frequency re-use between beams. Each beam therefore acts somewhat in the manner of a cell of a conventional terrestrial cellular system. For example, there may be 163 beams. The frequencies are allocated between satellites such that within each plane, neighbouring satellites use different frequencies at those of their beams which overlap and satellites from one plane use different frequencies than those used by satellites of the other plane.

Similarly, each satellite is arranged to receive radiation in an array of beams, which in this embodiment cover the same footprints beneath the satellites, to provide a plurality of user uplink beams each carrying different frequencies.

In this embodiment, each uplink and downlink frequency carries a plurality (e.g. 6) of time division channels, so that each mobile terminal 2 communicates on a channel comprising a given time slot in a given uplink and downlink frequency. The time slots are separated by a short guard interval.

Within each beam there is also provided a downlink common broadcast control channel (equivalent to the broadcast common control channel or BCCH of the GSM system) which occupies at least one of the frequencies for each beam; the frequencies used by the broadcast control channels of the beams are stored within each mobile terminal 2 which is arranged to scan these frequencies.

The satellites of this embodiment function as repeaters. Each satellite acts as a "bent pipe", amplifying and relaying signals from the user terminals 2 on the user terminal uplink, to the Earth station nodes 4 on a feeder downlink. Also (although it is not germane to this invention) signals from the Earth stations 4 on a feeder uplink are relayed down to the user terminals 2 on a user downlink.

Every frequency/channel in the user uplink therefore has an equivalent channel in the feeder downlink, and the satellite payload operates in accordance with a predetermined routing table, to translate a user link frequency from one of the user uplink beams (e.g. at around 2 GHz) to an equivalent frequency channel in the feeder downlink (e.g. at 5 or 7 GHz). The satellite performs amplification of the user uplink signal, in this embodiment at an intermediate frequency. The user uplink signals are not, however, digitally decoded and then remodulated. Thus, RF information such as delay and Doppler shift is preserved in the feeder downlink signal reaching the Earth station node 6.

The position of each satellite is known to a high degree of accuracy. The movement of each satellite, defined by the parameters of its orbit (the ephemeris) therefore enables each Earth station node 6 to know where the satellite is, and where it will be in future.

From a knowledge of the shape of the Earth (the polar and equatorial radii, for example) and the satellite orbits, the satellite Earth station node 6 or database station 15 can calculate position data of a transmitting source from its signal propagation delay and its Doppler shift in the uplink signal.

The satellites 4a are arranged in a constellation in sufficient numbers and suitable orbits to cover a substantial area of the globe (preferably to give global coverage).

For example 10 (or more) satellites may be provided in two mutually orthogonal intermediate circular orbits (or more) at an altitude of, for example, about 10,500 kilometres (6 hour orbits) and equatorial inclinations of 45°, as shown in Figure 5. Equally, however, larger numbers of lower satellites may be used, as disclosed in EP 0365885, or other publications relating to the Iridium system, for example.

In this embodiment, registration of mobile terminals is performed substantially as in well known terrestrial GSM networks. As such procedures in general are known to the skilled person, only a brief re-cap will be given here. On initially encountering the network (or where contact had previously been lost with the network and is restored after a lengthy interval or in a different place) the mobile terminal transmits a unique international mobile subscriber identity (IMSI) code associated with the SIM. The node 6 receiving the code accesses the data base station 15, obtains authentication information therefrom, and, if the user terminal 2 is authenticated, allocates a temporary mobile subscriber identity (TMSI) which masks the identity of the user and is used in subsequent communications with that node 6. On subsequently re-registering, it is only necessary to send the TMSI from the user terminal 2. Both the user terminal and the network have criteria for forcing the user terminal to re-register under certain circumstances, by resending the IMSI rather than the TMSI, to permit the identity of the user terminal to be re-authenticated.

Referring to Figure 7, in a step 1002, an Earth station node 6a receives an IMSI as part of an registration process from a user terminal 2a. This may have followed a random access attempt from the user terminal 2a to communicate with the node 6a, followed by the grant of a signalling channel by the node 6a. Alternatively, it may take place on an established signalling channel as a re-registration process initiated either by the terminal 2a or the node 6a.

In a step 1004, the IMSI is passed from the Earth station node 6a to the database station 15 via a signalling link 60. At the database station 15, the IMSI is looked up in a registration look up table. This look up process is conveniently performed in parallel with other look up operations such as the supply of authentication data from the database station 15. For each IMSI stored in the table, there is a corresponding entry indicating whether the status of the user is "normal" or "special". The significance of these entries will be discussed below. The entry is signalled back from the database station 15 to the node 6a.

Where (step 1006) the entry indicates that the user terminal 2a is of "normal" status, the allocation of an Earth station node proceeds (shown generally as step 1008) conventionally; it may be based, for example, on a comparison of the position of the mobile user (determined, as discussed above by delay and Dopler measurements) and the position of the nodes 6, to allocate the mobile user to the closest node. Alternatively, it may be based upon present and predicted link quality as disclosed in our earlier application WO 96/16488, incorporated herein in its entirety by reference.

For international mobile subscriber identities where the subscriber is indicated as having "special" status, an additional entry is stored in the table, identifying the node 6b to be allocated. This is looked up in step 1010 and returned to the node 6a from the database station 15. If the node 6a receives data identifying a node 6b to be allocated, then (step 1012) the node 6a proceeds to allocate the identified node 6b to proceed with registration of the user terminal.

In the allocation process of step 1008 and 1012, where the node identified for registration of the user terminal is the node 6a which is currently in communication with the user terminal (as will often be the case) that node 6a proceeds itself with the registration.

Where the node to be allocated differs from the node 6a currently communicating with the user terminal, a signalling link is established via the ground base network 14 to the allocated Earth station node 6b, and the data (including the IMSI) received from the user terminal 2a is transmitted to the allocated Earth station node 6b, which thereafter proceeds with the registration process, communicating via the signalling link, through the satellite base station part 22 of the original Earth station node 6a.

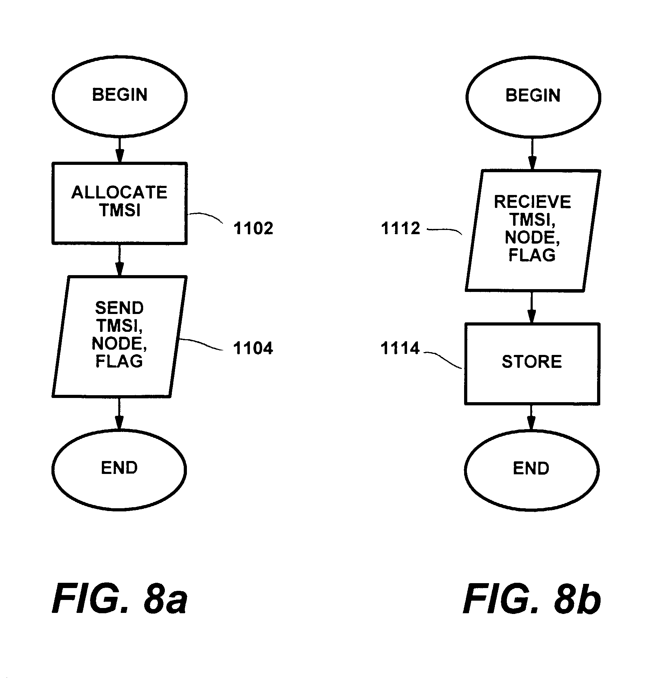

Referring to Figure 8b, having authenticated the user terminal, the node allocates a temporary mobile subscriber identity number (step 1102) to the user terminal. In addition to the TMSI, the identity of the allocated Earth station node 6b is also sent, together with a one bit flag which may be either set or not set. The significance of the flag will be discussed below.

Referring to Figure 8b, in step 1112, the user terminal 2a receives the TMSI, indication of allocated Earth station node identity, and flag and in step 1114, these are stored within the terminal (for example within the subscriber identity module 35 thereof).

Subsequent calls to and from the user terminal 2a will proceed via the Earth station node 6a with which the user terminal is in radio communication via the satellite 4; thence through the allocated switching node 6b; thence to the PSTN or other destination network 10.

Thus, for example, a terminal user who is in frequent contact with destination telephones 12 in a first country (for example the UK) may arrange to have all calls to and from him routed through the Earth station node 6b closest to the UK, even where his user terminal is communicating with an Earth station node 6a on the other side of the planet (for example in Australia).

Accordingly, the long distance call travels over the dedicated ground network lines 14 between the nodes 6a, 6b and is carried in low bit rate format until it is rate-converted at the allocated node 6b, thus reducing substantially the volume of international call traffic.

Furthermore, since the route is within the dedicated ground network of the satellite system, the variable quality of international PSTN links (which may arbitrarily be carried via subsea cable, optical fibre or satellite links depending upon traffic conditions) is avoided, thus leading to a more reliable and repeatable service.

### Re-Registration

Where contact has completely been lost with the network for a substantial period of time, or under other circumstances, the registration process of Figures 7 and 8 may be repeated. However, in most cases this is unnecessary; specifically where the user terminal 2a has not moved closer to a new Earth station node than that with which it was previously in communication (which, in the present embodiment, would typically require a journey on the order of hundreds of miles).

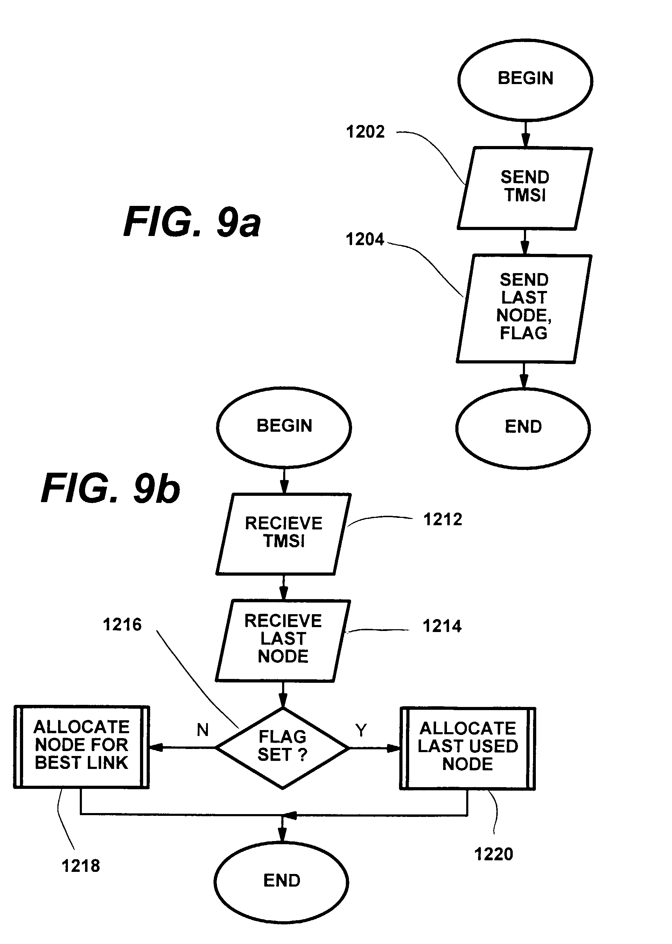

Under these circumstances, referring to Figure 9, in step 1202, the user terminal 2a sends the TMSI data via the satellite 4 to an Earth station node 6a. In a step 1212, the Earth station node 6a receives the TMSI. Unless the validity of its TMSI has expired due to, for example, fraudulent activity, the signalling link is maintained to allow the user terminal 2a to transmit (step 1204) the last allocated node indicator and flag (which had previously been stored in step 1114 of Figure 8b) which are received at the Earth station node 6a in step 1214.

In step 1216, the Earth station node 6a examines whether the flag is set. In the set condition, the flag indicates that the last allocated node 6b should be re-allocated to the user terminal; in the unset condition, the flag indicates that a suitable node should be selected on link quality criteria. Accordingly, in step 1216, the node 6a determines the state of the flag. If set, the last used node 6b is re-allocated to the user terminal 2a, and a signalling link is set up to that node 6b which then controls the subsequent call via the satellite base station portion 22 of the node 6a, as discussed above.

On the other hand (step 1216), if the flag is not set, a suitable node is allocated (for example node 6c or 6d) in step 1218, in the same fashion as in step 1008 of Figure 7. The new allocated node receives from the communicating node 6a the identity of the last allocated node, to enable the retrieval of authentication and other data for communication with the user terminal 2a in known fashion.

Thus, a one bit flag can be used, together with the identity of the last registered node, to ensure that the satellite network always allocate the same node 6b to the user terminal 2a. The user terminal 2a does not itself need to store or generate any special data indicating that it falls into a particular category, or indicating what the identity of its allocated Earth station node should be; this information is initially derived from the subscriber identity number (IMSI) by the system, and then passed back to be temporarily held on the user terminal 2a between subsequent re-registrations.

In this fashion, it is not necessary to repeatedly send the IMSI over the air, which improves confidentiality and security of communication.

Where, for some reason it is desired to change the allocated Earth station node for a given user, this may be performed by manually altering the records held on the database station 15, or by dial up access thereto.

Alternatively, the database station 15 may historically log the Earth station nodes allocated to particular users, and may allocate or re-allocate Earth station nodes for use thereby based on the historical behaviour of the user terminals, and/or on the identities of the national PSTN networks or PLMN networks 10 called from or calling to the user terminal 2a. Thus, the routing performance of the network can be "tuned" to tend to route users preferentially through suitable nodes, wherever they may be located.

### SECOND EMBODIMENT

Whereas it is in general convenient to relieve user terminals of the need to supply special or additional data other than that conventionally used for GSM signalling (and accordingly to avoid the need to explicitly signal an Earth station node to be used by the user terminal 2), it may still be preferable for certain groups of users to do so.

For example, particular types of terminal for special purposes may need to control call routing on a connection-by-connection basis rather than by making use of historically suitable or normally suitable nodes.

Accordingly, in this embodiment, at least one user terminal 2b is arranged to signal the identity of an Earth station node 6c to be allocated to that user terminal, and the network components (in other words, the nodes 6 and database station 15) are arranged to recognise a signalled node identity and allocate the requested node 6c accordingly.

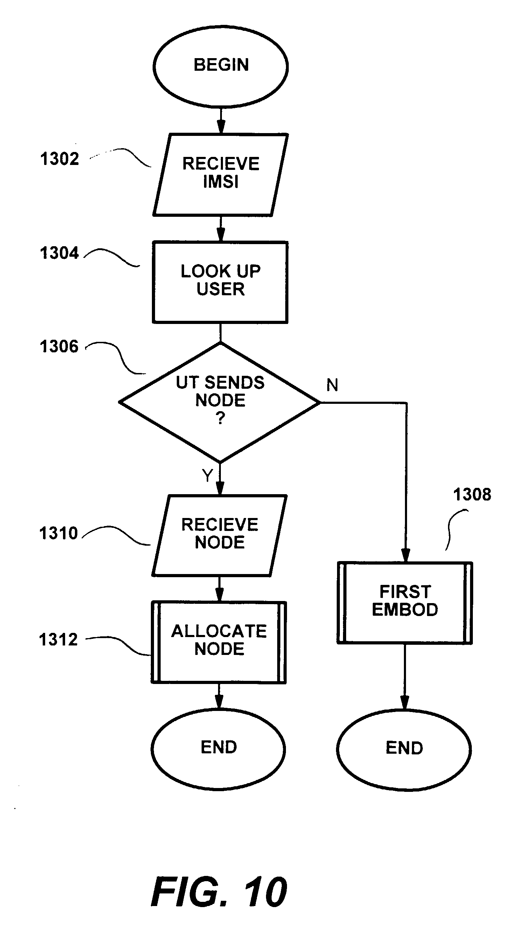

Referring to Figure 10, in a step 1302, during a registration attempt an Earth station node 6a receives an IMSI identifier. In step 1304, the Earth station node 6a signals to the database station 15 as described above, and the database station 15 looks up the IMSI of the user terminal 2b. The status entry of the user terminal 2b indicates that it is of a type which will supply a node identifier specifying the node 6c to be allocated.

If (step 1306) no such entry is recorded (i.e. the terminal is of the "normal" or "special" type 2a discussed above in relation to the first embodiment) then in step 1308 the process of the first embodiment is performed.

If, however, the entry indicates that the terminal 2b will supply an identification of the node to be allocated to it, this identification is signalled to the original node 6a which then receives the node indication in step 1310 from the user terminal 2b. In step 1312, the signalled node is allocated to control further access to the user terminal 2b as discussed above, by setting up a signalling link from the communicating node 6a to the allocated node 6c.

The process of Figure 8 is then performed. On subsequent temporary re-registrations, the user terminal 2b transmits the same TMSI and is repeatedly allocated to the same node 6c as it previously selected as described in relation to Figure 9.

Where the user terminal 2b is to be allocated instead to a new node 6d, the user terminal 2b initiates a re-registration by transmitting its IMSI, causing the re-execution of the process of Figure 10 to allocate the user terminal to the new node 6d.

Thus, where the user of the user terminal wishes to manually select a different node for communication (e.g. by entry via the keypad 38) he can do so. Alternatively, the terminal 2b may monitor local radio conditions itself and may an appropriate choice of node periodically, rather than relying on the node determined by the system. Alternatively, nodes may be changed periodically in a predetermined cycle depending on, for example, time of day.

### OTHER EMBODIMENTS

It will be clear from the foregoing that the above described embodiment is merely one way of putting the invention into effect. Many other alternatives will be apparent to the skilled person and are within the scope of the present invention.

It will be apparent that rather than sending a separate one bit flag to indicate the node allocation type, the flag could form part of the indicator of the last allocated node (for example the first bit thereof) or of the TMSI.

The numbers of satellites and satellite orbits indicated are purely exemplary. Smaller numbers of geostationary satellites, or satellites in higher altitude orbits, could be used; or larger numbers of low Earth orbit (LEO) satellites could be used. Equally, different numbers of satellites in intermediate orbits could be used.

Although TDMA has been mentioned as suitable access protocol, the present invention is fully applicable to other access protocols, such as code division multiple access (CDMA) or frequency division multiple access (FDMA).

Equally, whilst the principles of the present invention are envisaged above as being applied to satellite communication systems, the possibility of the extension of the invention to other communications systems (e.g. digital terrestrial cellular systems such as GSM) is not excluded.

It will be understood that components of embodiments of the invention may be located in different jurisdictions or in space. For the avoidance of doubt, the scope of the protection of the following claims extends to any part of a telecommunications apparatus or system or any method performed by such a part, which contributes to the performance of the inventive concept.

## Claims

1. A method of registering a satellite telephony user terminal with a system comprising one or more earth stations for communication with said user terminal via one or more satellites; and one or more switch nodes interconnected therewith by a terrestrial network; the method comprising;
receiving, from the terminal, data specifying a switch node to be used for communication with that terminal; and
allocating that switch node as the node via which calls to and from the user terminal should be directed.

2. The method of claim 1, further comprising;
determining whether said data is present, and if not;
allocating a said switch node on other criteria.

3. The method of claim 2, further comprising;
determining the position of said user terminal; and
allocating a said switch node on the basis of said position and that of the switch nodes.

4. The method of any preceding claim, in which the data comprises;
an indication of the last switch node allocated to said user terminal.

5. The method of claim 4 appended to claim 2, in which the data further comprises;
an indication of whether said last switch node should be used again or not.

6. The method of any preceding claim, further comprising the steps of;
receiving, from the terminal, data indicative of the identity of the user or the user terminal;
determining therefrom a switch node to be used for communication with that terminal; and
allocating that switch node as the node via which calls to and from the user terminal should be directed.

7. A method of registering a satellite telephony user terminal with a system comprising one or more earth stations for communication with said user terminal via one or more satellites; and one or more switch nodes interconnected therewith by a terrestrial network; the method comprising;
determining whether data has been received from the terminal, which is indicative of the identity of the user or the user terminal;
if so,
determining therefrom a switch node to be used for communication with that terminal; and
allocating that switch node as the node via which calls to and from the user terminal should be directed;
if not;
determining whether data has been received from the terminal, which is indicative of a switch node to be used for communication with that terminal and not of the identity of the user or the user terminal; and
allocating that switch node as the node via which calls to and from the user terminal should be directed;
if not;
allocating a said switch node on other criteria.

8. A user terminal for a satellite communications system, said terminal being operable to transmit data specifying a switch node to be used for communication with that terminal, said data being indicative of the identity of said switch node and not of the identity of the user or the user terminal.

9. A network control component of a mobile satellite communications system comprising one or more earth stations for communication with a satellite telephony user terminal via one or more satellites and one or more switch nodes interconnected therewith by a terrestrial network; said component being operable to register a said user terminal with said system; the component comprising;
means for receiving, from the terminal, data specifying a switch node to be used for communication with that terminal; and
means for allocating that switch node as the node via which calls to and from the user terminal should be directed.

10. The component of claim 9 which comprises one of said earth stations.

11. The component of claim 9 or claim 10, which further comprises one of said switch nodes.

12. A satellite system network component for performing the process of any of claims 1 to 7.
